**Europäisches Patentamt**

**European Patent Office**

**Office européen des brevets**

(19)

(11) **EP 1 359 387 A2**

(12) ## EUROPEAN PATENT APPLICATION

(43) Date of publication:
**05.11.2003 Bulletin 2003/45**

(51) Int Cl.⁷: **G01B 5/00**, G01B 11/26

(21) Application number: **03252691.5**

(22) Date of filing: **29.04.2003**

(84) Designated Contracting States:
**AT BE BG CH CY CZ DE DK EE ES FI FR GB GR
HU IE IT LI LU MC NL PT RO SE SI SK TR**
Designated Extension States:
**AL LT LV MK**

(30) Priority: **30.04.2002 US 377076 P**

(71) Applicant: **DANA CORPORATION
Toledo, OH 43606 (US)**

(72) Inventors:
- **Rapp, Jeremy A.
  Toledo, Ohio 43606 (US)**
- **White, Matthew R.
  Sylvania, Ohio 43560 (US)**

- **Denny, Brent
  Salem, Ohio 44460 (US)**
- **Mollenkamp, Nicholas
  North Ridgeville, Ohio 44039 (US)**
- **Rain, Mark
  St Marys, Ohio 45885 (US)**
- **Francis, Douglas
  Toledo, Ohio 43607 (US)**
- **Maresca, Louis
  Westerville, Ohio 43081 (US)**

(74) Representative: **Giles, Ashley Simon et al
Haseltine Lake & Co.,
Imperial House,
15-19 Kingsway
London WC2B 6UD (GB)**

(54) **Device for measuring universal joint operating angles in a drive train system**

(57)    A device measures the operating angle of a universal joint in a drive train system without any physical contact with the components of the drive train system. The drive train system can include first and second shafts that are connected together by the universal joint. The device includes a first sensor for generating a first signal that is representative of the angular orientation of the first shaft relative to the horizontal and a second sensor for generating a second signal that is representative of the angular orientation of the second shaft relative to the horizontal. Each of the first and second sensors can include a pair of non-contact sensors, such as a pair of laser distance sensors, that are mounted on a base. A controller is responsive to the first and second signals for determining the operating angle of the universal joint.

**F I G. 1**

EP 1 359 387 A2

**EP 1 359 387 A2**

**Description**

BACKGROUND OF THE INVENTION

This invention relates in general to devices for measuring the operating angle of a universal joint in a drive train system. In particular, this invention relates to an improved device for remotely measuring such a universal joint operating angle without any physical contact with the components of the vehicle drive train system.

Drive train systems are widely used for generating power from a source and for transferring such power from the source to a driven mechanism. Frequently, the source generates rotational power, and such rotational power is transferred from the source to a rotatably driven mechanism. For example, in most land vehicles in use today, an engine/transmission assembly generates rotational power, and such rotational power is transferred from an output shaft of the engine/transmission assembly through a hollow cylindrical driveshaft tube to an input shaft of an axle assembly so as to rotatably drive the wheels of the vehicle. To accomplish this, a first universal joint is usually connected between the output shaft of the engine/transmission assembly and a first end of the driveshaft tube, while a second universal joint is usually connected between a second end of the driveshaft tube and the input shaft of the axle assembly. The universal joints provide a rotational driving connection from the output shaft of the engine/transmission assembly through the driveshaft tube to the input shaft of the axle assembly, while accommodating a limited amount of angular misalignment between the rotational axes of these three shafts.

The various components of these vehicular and other drive train systems are usually supported on or connected to a frame assembly or other rigid support structure so as to be generally fixed in position relative to one another during use. However, in many instances, the drive train system may be designed to accommodate a limited amount of movement of one or more of the components of the drive train system relative to the others. For example, in a commonly known vehicular drive train system, the engine/transmission assembly is secured to the vehicle frame assembly so as to be essentially immovable relative thereto, while the axle assembly is resiliently supported by a suspension assembly on the vehicle frame assembly for movement relative thereto, such as when bumps in the road are encountered. Thus, the axle assembly is permitted to move a limited amount relative to the engine/transmission assembly under normal operating conditions. Furthermore, it is known other relative movements of the drive train system components can occur under certain operating conditions. For example, when relatively large torsional loads are transmitted through a vehicular drive train system from the engine/transmission assembly to the axle assembly, such as can occur during rapid acceleration of the vehicle, the axle assembly may pitch or rotate slightly relative to the remainder of the vehicle. Similar pitching or rotating movements of the axle assembly can occur during relatively rapid deceleration of the vehicle, such as when the brakes of the vehicle are applied.

As discussed above, each of the universal joints provides a rotatable driving connection between two of the shafts of the drive train assembly. The angle that is defined between the rotational axes of these two shafts is often referred to as the operating angle of the universal joint. The operating angle is an important design criteria for any universal joint, and this is particularly true with respect to universal joints that are provided in vehicular drive train systems. Thus, in the design and manufacture of universal joints, it is important to calculate or otherwise determine the range of operating angles that a universal joint will experience during use.

However, as also discussed above, the various dynamic movements of the components of the vehicular drive train system during use can cause variations in the operating angles of the universal joints. The magnitudes of such dynamic movements (and, thus, such operating angle variations) can vary widely from vehicle model to vehicle model as a result of a variety of factors, such as suspension characteristics, vehicle weight, and the like. To insure that the universal joints of the drive train system are always operated within predetermined design parameters for the operating angles, it would be desirable to provide an apparatus that is capable of measuring such operating angles while the vehicle is operated. A variety of such operating angle measurement devices are known in the art. However, known operating angle measurement devices usually rely upon a measuring arm or other component that physically engages a component of the drive train system. Inasmuch as the various components of the drive train system all rotate during use, such physical contact usually results in undesirable wear. Thus, it would be desirable to provide an improved device for remotely measuring such a universal joint operating angle without any physical contact with the components of the drive train system.

SUMMARY OF THE INVENTION

This invention relates to a device for measuring the operating angle of a universal joint in a drive train system without any physical contact with the components of the drive train system. The drive train system can include first and second shafts that are connected together by the universal joint. The device includes a first sensor for generating a first signal that is representative of the angular orientation of the first shaft relative to the horizontal and a second sensor for generating a second signal that is representative of the angular orientation of the second shaft relative to the horizontal. Each of the first and second sensors can include a pair of non-contact sensors, such as a pair of laser distance sensors, that are mounted on a base. A controller is responsive to the first and second signals for determining the operating angle of the universal joint.

Various objects and advantages of this invention will become apparent to those skilled in the art from the following detailed description of the preferred embodiments, when read in light of the accompanying drawings.

BRIEF DESCRIPTION OF THE DRAWINGS

Fig. 1 is schematic side elevational view of a first known structure for a vehicular drive train system including a pair of universal joints and a portion of a first embodiment of a device for measuring the operating angles of such universal joints in accordance with this invention.

Fig. 2 is an enlarged perspective view of a portion of the first embodiment of the operating angle measuring device illustrated in Fig. 1.

Fig. 3 is a sectional elevational view schematically illustrating how errors can occur if the operating angle measuring device illustrated in Figs. 1 and 2 is used to measure points on the exterior surface of the driveshaft tube illustrated in Fig. 1.

Fig. 4 is a sectional elevational view schematically illustrating how the operating angle measuring device illustrated in Figs. 1 and 2 can be used to measure a center point on the interior of the driveshaft tube illustrated in Fig. 1.

Fig. 5 is a block diagram of the first embodiment of the operating angle measuring device illustrated in Figs. 1 and 2.

Fig. 6 is schematic side elevational view of a second known structure for a vehicular drive train system including three universal joints and a portion of a second embodiment of a device for measuring the operating angle of such universal joints in the second drive train system in accordance with this invention.

Fig. 7 is an enlarged perspective view of a portion of the second embodiment of the operating angle measuring device illustrated in Fig. 6.

DETAILED DESCRIPTION OF THE PREFERRED EMBODIMENTS

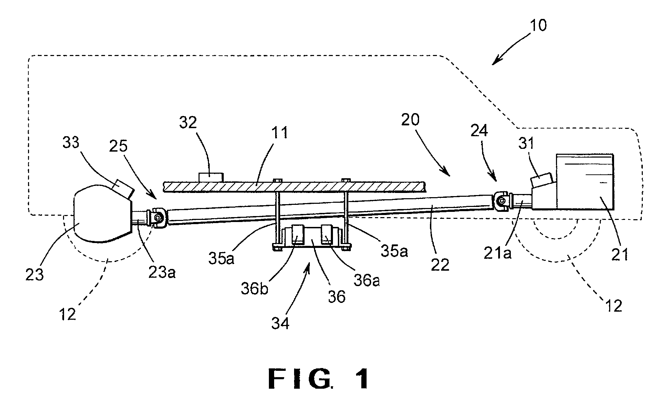

Referring now to the drawings, there is schematically illustrated in Fig. 1 a portion of a vehicle, indicated generally at 10, that is generally conventional in the art. The vehicle 10 includes a body and frame assembly (a portion of which is illustrated at 11) that is supported upon a plurality of ground-engaging wheels 12 by a resilient suspension system (not shown) and functions as a reference member in the manner described below. The vehicle 10 also includes a first embodiment of a drive train system, indicated generally at 20, that is also generally conventional in the art. The illustrated drive train system 20 includes an engine/transmission assembly 21 that generates rotational power to an output shaft 21a. Such rotational power is transferred from the output shaft 21a of the engine/transmission assembly 21 through a hollow cylindrical driveshaft tube 22 to an input shaft 23a of an axle assembly 23. As a result, one or more of the wheels 12 of the vehicle 10 are rotatably driven. A first universal joint, indicated generally at 24, is connected between the output shaft 21a of the engine/transmission assembly 21 and a first end of the driveshaft tube 22, while a second universal joint, indicated generally at 25, is connected between a second end of the driveshaft tube 22 and the input shaft 23a of the axle assembly 23. The universal joints 24 and 25 provide a rotational driving connection from the output shaft 21a of the engine/transmission assembly 21 through the driveshaft tube 22 to the input shaft 23a of the axle assembly 23, while accommodating a limited amount of angular misalignment between the rotational axes of these three shafts 21a, 22, and 23a. Although this invention will be described in the context of the illustrated vehicular drive train system, it will be appreciated that this invention may be practiced in conjunction with any type of drive train systems are widely used for generating power from a source and for transferring such power from the source to a driven mechanism.

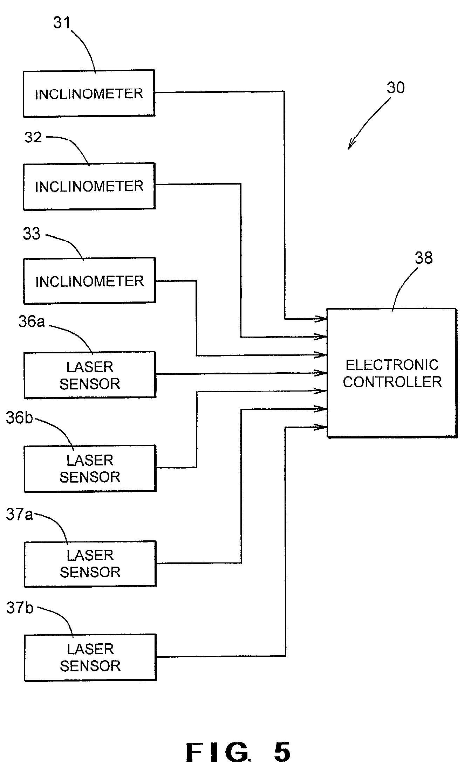

A device, indicated generally at 30 in Fig. 5, is provided on the vehicle 10 for measuring the operating angles of the universal joints 24 and 25. The measuring device 30 includes a first inclinometer 31 that is secured to or otherwise fixed in position relative to the engine/transmission assembly 21, a second inclinometer 32 that is secured to or otherwise fixed in position relative to the portion 11 of the body and frame assembly of the vehicle 10, and a third inclinometer 33 that is secured to or otherwise fixed in position relative to the axle assembly 23. Each of the inclinometers 31, 32, and 33 is, of itself, conventional in the art and is adapted to generate an electrical signal that is representative of the angular orientation of the component to which it is secured relative to the horizontal. Thus, the first inclinometer 31 generates a signal that is representative of the angular orientation of the output shaft 21a of the engine/transmission assembly 21 relative to the horizontal, the second inclinometer 32 generates a signal that is representative of the angular orientation of the portion 11 of the body and frame assembly of the vehicle 10 relative to the horizontal, and the third inclinometer 33 generates a signal that is representative of the angular orientation of the input shaft 23a of the axle assembly 23. A variety of such inclinometers 31, 32, and 33 are commercially available, including the FAS-G gyro enhanced inclinometer that is available from MicroStrain, Inc. of Burlington, Vermont.

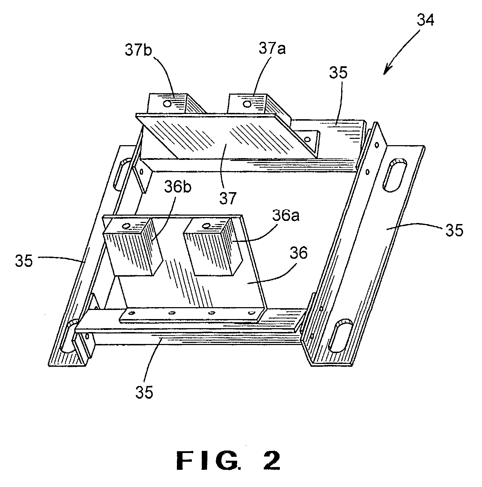

The measuring device 30 also includes an assembly, indicated generally at 34, that is adapted to generate an electrical signal that is representative of the angular orientation of the driveshaft tube 22 relative to the portion 11 of the body and frame assembly of the vehicle 10. The structure of the assembly 34 is illustrated in detail in Fig. 2. As shown therein, the assembly 34 includes a plurality of structural members 35 that are connected together to form a base. The structural members 35 may be formed from any desired material and may have any desired shape. Preferably, however, the structural members 35 are arranged so that a first portion of the base is disposed on one side of the driveshaft tube 22, while a second portion of the base is disposed on the other side of the driveshaft tube 22 when looking vertically downwardly from above or below the vehicle 10. A plurality of mounting fasteners 35a can be used to connect the structural members 35 of the base to the portion 11 of the body and frame assembly of the vehicle 10. Thus, the structural members 35 of the base are fixed in position relative to the portion 11 of the body and frame assembly of the vehicle 10.

A pair of mounting brackets 36 and 37 are secured to the structural members 35 on opposite sides of the base. In the illustrated embodiment, each of the mounting brackets 36 and 37 is generally L-shaped, although such is not required. The mounting brackets 36 and 37 are preferably disposed on opposite sides of the driveshaft tube 22, although such is not required. A first pair of non-contact sensors 36a and 37a are respectively secured to the mounting brackets 36 and 37. Similarly, a second pair of non-contact sensors 36b and 37b are respectively secured to the mounting brackets 36 and 37. Each of the non-contact sensors 36a, 36b, 37a, and 37b can be embodied as any device that is capable of sensing the location or distance to the driveshaft tube 22 without physically contacting same. For example, the non-contact sensors 37 can be embodied as laser distance sensors, such as commercially available from Memsic, Inc. of Andover, Massachusetts.

The angular orientation (or slope) of the driveshaft 22 relative to the portion 11 of the body and frame assembly of the vehicle 10 can be calculated by determining two center point locations on the driveshaft tube 22, then dividing the change in height ($\Delta y$) of the center point locations by the longitudinal distance between the center points ($\Delta z$), as shown in the following equation:

$$slope = \frac{rise}{run} = \frac{\Delta y}{\Delta z}.$$

In the manner explained in detail below, the change in height ($\Delta y$) of the center point locations will be determined using the non-contact sensors 36a, 36b, 37a, and 37b, while the longitudinal distance ($\Delta z$) between such center points is fixed by the geometry of the mounting brackets 36 and 37. Specifically, the non-contact sensors 36a, 36b, 37a, and 37b are used to find the coordinates of the necessary center point locations of the driveshaft tube 22, and the difference between the two center point locations (the $y$ coordinates) is the rise ($\Delta y$).

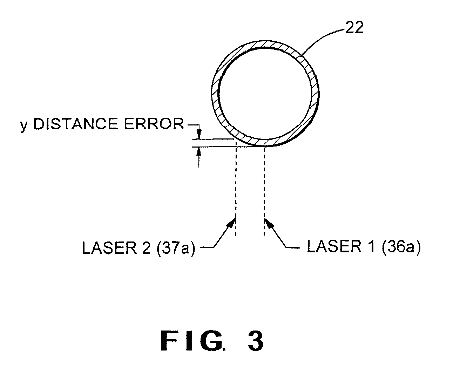

In order to insure accuracy, it is desirable that the distances measured by the non-contact sensors 36a, 36b, 37a, and 37b be taken at a common point on the driveshaft tube 22. To accomplish this, it is preferable that the slope of the driveshaft tube 22 be determined from the center point on the interior thereof, rather than from a point on the exterior surface of the driveshaft tube 22. If the laser beams from the non-contact sensors 36a, 36b, 37a, and 37b impinge upon the driveshaft tube 22 shaft at different distances from the x-axis, then a $y$ distance error will be recorded due to the radius of the shaft. This situation is illustrated in Fig. 3.

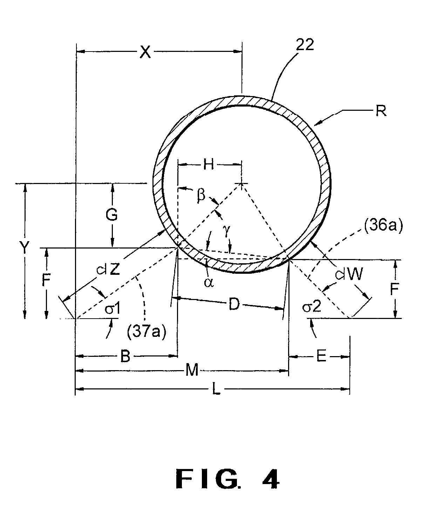

To avoid this situation, reference is made to Fig. 4, which illustrates how the center point of the driveshaft tube 22 can be calculated. Initially, two points along the radius of the driveshaft tube 22 are determined. To accomplish this, two of the laser sensors 36a and 37a are used to find these two points. The points can be determined using knowledge of the angle at which the laser sensors 36a and 37a are positioned, the distance between such laser sensors 36a and 37a, a base coordinate system, and the distance that the laser sensors 36a and 37a are reading. The angle at which the laser sensors 36a and 37a are mounted and the distance between the laser sensors 36a and 37a are known values that are determined from the geometry of the structural components 35 of the base. The base coordinate system can be chosen at any known position. For these calculations, the base coordinate system is chosen as the base point of the laser sensors 36a and 37a that is located in the negative $x$ direction of the center position of the driveshaft tube 22. After the two points on the driveshaft tube 22 are found, the center point of the driveshaft tube 22 is determined by drawing three triangles connecting the two points on the driveshaft tube 22 and the center of the driveshaft tube 22. Pythagorean's Theorem and the Law of Cosines are then applied to determine the coordinates of the center point of the driveshaft tube 22. The radius of the driveshaft tube 22 needs to be known to determine this center location. The following calculations illustrate one method that can be used to find a center point on the driveshaft tube 22.

Inputs

$R := 2$      radius of shaft

$L := 6$      distance between lasers 1 & 2

$\theta1 := .6109$      angle of laser 1

$\theta2 := .7854$      angle of laser 2

Sensor Readings

$dZ := 2.7242$      reading from laser 1

$dW := 1.8517$      reading from laser 2

Calculations

$A := dZ \cdot \sin(\theta1)$      $A = 1.563$

$B := dZ \cdot \cos(\theta1)$      $B = 2.231$

$F := dW \cdot \sin(\theta2)$      $F = 1.309$

$E := dW \cdot \cos(\theta2)$      $E = 1.309$

$M := L - E$      $M = 4.691$

$\alpha := \operatorname{atan}\left[\dfrac{(F - A)}{M - B}\right]$      $\alpha = -0.103$

$D := \sqrt{(M - B)^2 + (F - A)^2}$      $D = 2.472$

$\gamma := \operatorname{acos}\left(\dfrac{D^2}{2 \cdot R \cdot D}\right)$      $\gamma = 0.905$

$\beta := 1.570796 - \gamma - \alpha$      $\beta = 0.769$

$G := R \cdot \cos(\beta)$      $G = \blacksquare$

$H := R \cdot \sin(\beta)$      $H = \blacksquare$

$X := B + H$      $X = \blacksquare$      horizontal distance from laser 1

$Y := A + G$      $Y = \blacksquare$      verticle distance from laser 1

Using the above method, the first pair of laser sensors 36a and 37a are used to determined the coordinates of the center point of the driveshaft tube 22 at a first location. Then, using the same method, the second pair of laser sensors 36b and 37b can be used to determined the coordinates of the center point of the driveshaft tube 22 at a second location. As discussed above, the change in height ($\Delta y$) of the center point locations (as calculated using the information from non-contact sensors 36a, 36b, 37a, and 37b) is divided by the longitudinal distance ($\Delta z$) between such center points (as determined by the geometry of the mounting brackets 36 and 37) represents the angular orientation (or slope) of the driveshaft 22 relative to the portion 11 of the body and frame assembly of the vehicle 10.

Fig. 5 is a block diagram of the first embodiment of the operating angle measuring device 30 illustrated in Figs. 1 and 2. As shown therein, the operating angle measuring device 30 further includes a controller 38 that receives the signals generated by the three inclinometers 31, 32, and 33 and the four laser sensors 36a, 36b, 37a, and 37b. The controller 38 is responsive to such signals for calculating the operating angles of the two universal joints 24 and 25 in the drive train system of the vehicle 10. The controller 38 can be embodied as any conventional microprocessor or other programmable controller that is responsive to the various input signals for determining the operating angles of the universal joints 24 and 25.

As mentioned above, the first inclinometer 31 generates a signal that is representative of the angular orientation of the output shaft 21a of the engine/transmission assembly 21 relative to the horizontal. When the vehicle 10 is operated on a flat surface, the output signal from the first inclinometer 31 also represents the angular orientation of the output shaft 21a of the engine/transmission assembly 21 relative to the portion 11 of the body and frame assembly of the vehicle 10. However, when the vehicle 10 is not operated on a flat surface (such as when ascending or descending a hill), the output signal from the first inclinometer 31 does not represent the angular orientation of the output shaft 21a of the engine/transmission assembly 21 relative to the portion 11 of the body and frame assembly of the vehicle 10. To account for these situations, the signal from the second inclinometer 32 can be subtracted from the signal from the first inclinometer 31 to achieve a signal that represents the angular orientation of the output shaft 21a of the engine/transmission assembly 21 relative to the portion 11 of the body and frame assembly of the vehicle 10. A similar calculation can be performed to achieve a signal that represents the angular orientation of the input shaft 23a of the axle assembly 23 relative to the portion 11 of the body and frame assembly of the vehicle 10. As discussed above, the assembly 34 is secured to the portion 11 of the body and frame assembly of the vehicle 10. Therefore, the signal that is calculated by the electronic controller 38 in response to the signals from the laser sensors 36a, 36b, 37a, and 37b is representative of the angular orientation of the driveshaft tube 22 relative to the portion 11 of the body and frame assembly of the vehicle 10.

Having calculated the angular orientations of the output shaft 21a of the engine/transmission assembly 21, the driveshaft tube 22, and the input shaft 23a of the axle assembly 23 (all relative to the portion 11 of the body and frame assembly of the vehicle 10), it is a simple matter to determine the operating angles of the universal joints 24 and 25. The difference between the angular orientation of the output shaft 21a of the engine/transmission assembly 21 and the angular orientation of the driveshaft tube 22 represents the operating angle of the first universal joint 24. Similarly, the difference between the angular orientation of the driveshaft tube 22 and the angular orientation of the input shaft 23a of the axle assembly 23 represents the operating angle of the second universal joint 25. These operating angles can be calculated and stored in the electronic controller 38 while the vehicle 10 is operated over a period of time in order to gather data regarding the operating angles that are experienced by the universal joints 24 and 25 during such use. This operating angle information can be use to insure that the universal joints 24 and 25 of the drive train system 20 are always operated within predetermined design parameters, regardless of variations in the magnitudes of the dynamic movements of the components of the drive train system 20 from vehicle model to vehicle model.

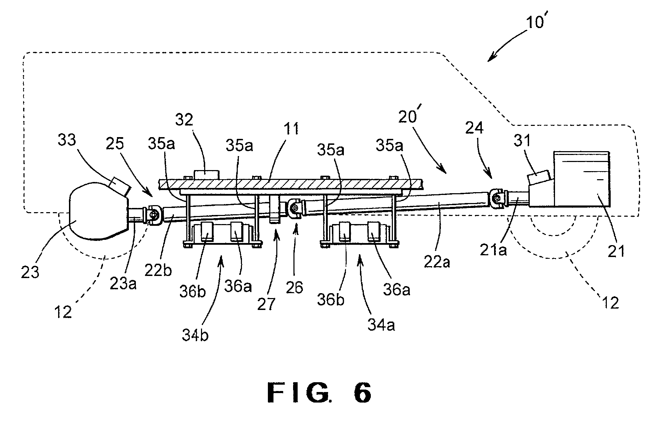

Fig. 6 schematically illustrates a portion of a modified vehicle, indicated generally at 10', that is similar to the vehicle 10 described above. The modified vehicle 10' includes a second embodiment of a drive train system, indicated generally at 20', that is also generally conventional in the art. The second embodiment of the drive train system 20' is similar in many respects to the first embodiment of the drive train system 20 described above, and like reference numbers are used to illustrated similar components. The second embodiment of the drive train system 20' includes a compound driveshaft that is composed of a first driveshaft tube 22a and a second driveshaft tube 22b that are connected together by a third universal joint, indicated generally at 26. A conventional center bearing assembly, indicated generally at 27, is provided for rotatably supporting the first and second driveshaft tubes 22a and 22b on the portion 11 of the body and frame assembly of the vehicle 20'.

A modified device is provided on the vehicle 10 for measuring the operating angles of the universal joints 24, 25, and 26. The modified measuring device includes a first inclinometer 31 that is secured to or otherwise fixed in position relative to the engine/transmission assembly 21, a second inclinometer 32 that is secured to or otherwise fixed in position relative to the portion 11 of the body and frame assembly of the vehicle 10, and a third inclinometer 33 that is secured to or otherwise fixed in position relative to the axle assembly 23. The inclinometers 31, 32, and 33 each function in the same manner as described above.

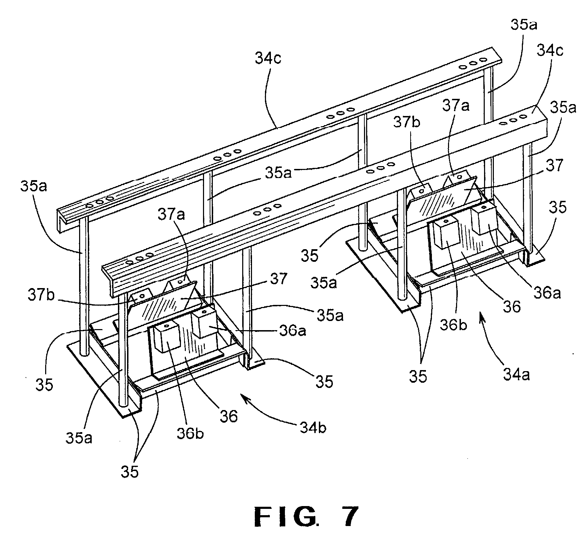

The modified measuring device also includes a first assembly 34a that is adapted to generate an electrical signal that is representative of the angular orientation of the first driveshaft tube 22a relative to the portion 11 of the body and frame assembly of the vehicle 10 and a second assembly 34b that is adapted to generate an electrical signal that is representative of the angular orientation of the second driveshaft tube 22b relative to the portion 11 of the body and frame assembly of the vehicle 10. The structure of the two assemblies 34a and 34b is illustrated in detail in Fig. 7. As shown therein, the assemblies 34a and 34b may be constructed as a single unit by a pair of interconnecting struts 34c that are, in turn, secured to the portion 11 of the body and frame assembly of the vehicle 10', although such is not required. The assemblies 34a and 34b each function in the same manner as described above and can be used to determine the operating angles of not only the first and second universal joints 24 and 25, but also the operating angle of the third universal joint 26.

In accordance with the provisions of the patent statutes, the principle and mode of operation of this invention have been explained and illustrated in its preferred embodiment. However, it must be understood that this invention may be practiced otherwise than as specifically explained and illustrated without departing from its spirit or scope.

**Claims**

1.  A device for measuring the angular orientation of a shaft comprising:

    a first sensor for generating a first sensor signal that is representative of a first point on the shaft;
    a second sensor for generating a second sensor signal that is representative of a second point on the shaft; and
    a controller that is responsive to said first and second sensor signals for determining the angular orientation of the shaft.

2.  The device defined in Claim 1 wherein said first and second sensors are non-contact sensors.

3.  The device defined in Claim 1 wherein said first and second sensors are laser distance sensors.

4.  The device defined in Claim 1 wherein said first sensor includes a first pair of sensors, and wherein said second sensor includes a second pair of sensors.

5.  The device defined in Claim 1 wherein said first sensor signal is representative of a first center point on the interior of the shaft, and wherein said second sensor signal is representative of a second center point on the interior of the shaft.

6.  The device defined in Claim 1 wherein said controller is responsive to said first and second sensor signals and to a signal that is representative of a distance between said first and second sensors for determining the angular orientation of the shaft.

7.  The device defined in Claim 1 further including a third sensor that generates a third sensor signal that is representative of the angular orientation of a reference member, and wherein said controller is responsive to said first, second, and third sensor signals for determining the angular orientation of the shaft relative to the reference member.

8.  The device defined in Claim 1 wherein the shaft includes first and second shaft portions, said first sensor generates a first sensor signal that is representative of a first point on the first shaft portion, said second sensor generates a second sensor signal that is representative of a second point on the first shaft portion, and said controller is responsive to said first and second sensor signals for determining the angular orientation of the first shaft portion.

9.  The device defined in Claim 8 further including a third sensor that generates a third sensor signal that is representative of a first point on the second shaft portion, a fourth sensor that generates a fourth sensor signal that is representative of a second point on the second shaft portion, and said controller is responsive to said third and fourth sensor signals for determining the angular orientation of the second shaft portion.

10. The device defined in Claim 9 wherein said controller is responsive to said first, second, third, and fourth sensor signals for determining an operating angle between the first and second shaft portions.

FIG. 1

FIG. 2

y DISTANCE ERROR

LASER 2 (37a)

LASER 1 (36a)

22

**FIG. 3**

**FIG. 4**

F I G. 5

FIG. 6

**FIG. 7**